Europäisches Patentamt

(19) European Patent Office

Office européen des brevets

(11) Veröffentlichungsnummer: **0 065 304**
A2

(12) # EUROPÄISCHE PATENTANMELDUNG

(21) Anmeldenummer: **82104309.8**

(51) Int. Cl.³: **F 16 H 39/50**

(22) Anmeldetag: **17.05.82**

(30) Priorität: **18.05.81 US 264918**

(43) Veröffentlichungstag der Anmeldung: **24.11.82**
Patentblatt 82/47

(84) Benannte Vertragsstaaten: **AT DE FR GB IT NL SE**

(71) Anmelder: **DEERE & COMPANY, 1 John Deere Road, Moline Illinois 61265 (US)**

(72) Erfinder: **Wiegardt, Gordon K., 334 Bonita Blvd., Cedar Falls Iowa 50613 (US)**

(74) Vertreter: **Fricke, Joachim, Dr. et al, Dr. R. Döring, Dr. J. Fricke, Patentanwälte Josephspitalstrasse 7, D-8000 München 2 (DE)**

(54) **Elektrohydraulisches Antriebssystem.**

(57) Ein elektrohydraulisches Antriebssystem mit wenigstens einem hydraulischen Funktionsglied oder Hydraulikmotor weist eine Hydraulikpumpe mit variabler Verdrängung auf, von deren Auslass das Funktionsglied über eine Drossel von veränderlichem Durchmesser und einem Richtungssteuerventil gespeist wird. Ein einziger Druckwandler ist pro Funktionsglied vorgesehen, um ein elektrisches Drucksignal zu erzeugen, welches den Druck hinter der variablen Drosselstelle anzeigt. Das Drucksignal wird einem Modulationskreis zugeführt, der ein bezüglich der Impulsbreite moduliertes Steuersignal mit einem Arbeitszyklus erzeugt, der in Abhängigkeit von dem Drucksignal und einem festen Bezugssignal variiert. Mit Hilfe dieses modulierten Steuersignals wird der Druck an der Verstelleinrichtung für die Veränderung der Verdrängung der Hydraulikpumpe eingesteuert, so dass diese dann, wenn die Last abgeschaltet ist, bei einem vorbestimmten Leerlaufdruck arbeitet und bei eingeschalteter Last so arbeitet, dass eine vorbestimmte Druckdifferenz zwischen dem Auslassdruck der Hydraulikpumpe und dem Druck hinter der veränderlichen Drosselstelle eingehalten wird.

- 1 -

## Elektrohydraulisches Antriebssystem

Die Erfindung betrifft ein elektrohydraulisches Antriebssystem, bestehend aus einer Druckmittelquelle in Form einer Hydraulikpumpe mit variabler Verdrängung, einer auf einen Steuerdruck ansprechenden Verstelleinrichtung für die Hydraulikpumpe und wenigstens einem Verbraucher, z.B. einem Hydraulikmotor, der über eine durch Ventil steuerbare Leitungsverbindung mit dem Auslaß der Hydraulikpumpe verbindbar ist, bei dem eine den Auslaßdruck der Hydraulikpumpe steuernde Verstelleinrichtung vorgesehen ist, welche über eine Steuereinrichtung mit einem Steuerdruck beaufschlagbar ist, und bei dem ein elektrischer Steuerkreis vorgesehen ist, der ein auf den Arbeitsdruck in der zum Hydraulikmotor führenden Verbindungsleitung ansprechenden und ein dem Druck entsprechendes Signal erzeugenden Wandler aufweist.

Elektrohydraulische Antriebssysteme dieser Art sind in verschiedenen Ausführungsformen bekannt(vergl. die US-PS 38 26 090). Die Verstellvorrichtungen für die Hydraulikpumpe besteht bei diesem elektrohydraulischen Antriebssystemen häufig aus einem vorgesteuerten Ventil in einer Druckmittelverbindung zwischen dem Auslaß der Hydraulikpumpe und der Verstellvorrichtung. Das vorgesteuerte Ventil wird dabei häufig durch eine Feder in Schließstellung vorgespannt und über einen hydraulischen Servomotor gegen die Vorspannung in Offenstellung bewegt. Der Servokolben steht unter dem Druck in einer Vorsteuerkammer. Der Druck in dieser Vorsteuerkammer entspricht dem Arbeitsdruck in der Verbindungsleitung des Hydraulikmotors. Auf diesen Arbeitsdruck spricht außerdem ein Druckfühler in Form eines Wandlers an, der bei Auftreten eines vorbestimmten Druckes ein elektrisches Signal erzeugt, welches die elektromagnetische Betätigungseinrichtung eines Ventils steuert, welches in der Verbindungsleitung zwischen der Arbeitsleitung des Motors und der Vorsteuerdruckkammer der Verstelleinrichtung für die Hydraulikpumpe angeordnet ist.

Es sind weitere elektrohydraulische Antriebssysteme mit einer Hydraulikpumpe von variabler Verdrängung bekannt, bei denen der Auslaß der Pumpe in Abhängigkeit vom Bedarf geändert wird(vergl. die US-PS'n 28 92 311 und 28 92 312). Die zugehörigen hydraulischen Steuersysteme arbeiten nur bei bestimmten Umgebungsverhältnissen zufriedenstellend. Es sind aber auch weitere elektrohydraulische Antriebssysteme bekannt, bei denen der hydraulische Arbeitsdruck durch einen Wandler gefühlt wird, wobei elektrische Rückmeldesteuerkreise vorgesehen sind(vergl. US-PS 40 74 529). Bei dieser bekannten Anordnung werden mehrere Wandler dieser Art benötigt, die unterschiedliche Drücke an verschiedenen Stellen des Systems fühlen und entsprechende Drucksignale erzeugen. Dies führt zu einem relativ aufwendigen und teuren System.

Es ist Aufgabe der Erfindung ein elektrohydraulisches Antriebssystem der eingangs näher bezeichneten Art zu schaffen, welches im Vergleich zum Bekannten einfach und preiswert herzustellen ist und zuverlässig eine Steuerung der Hydraulikpumpe ermöglicht, der Art, daß diese auch bei rasch wechselndem Bedarf zuverlässig den Bedarf deckt und dennoch besonders energiesparend arbeitet.

Diese Aufgabe wird erfindungsgemäß dadurch gelöst, daß die elektrische Steuereinrichtung eine das elektrische Drucksignal des Wandlers in ein entsprechendes Steuersignal umwandelnde Einrichtung aufweist, die so ausgebildet ist, daß bei Speisung des Hydraulikmotors durch die Hydraulikpumpe ein im wesentlicher konstanter Unterschied zwischen dem gefühlten Arbeitsdruck und dem Auslaßdruck der Hydraulikpumpe aufrechtgehalten wird.

Dabei wird zweckmäßigerweise von einem solchen elektrohydraulischen Arbeitssystem ausgegangen, bei dem ein vorgesteuertes Ventil zur Steuerung der Verbindung zwischen dem Auslaß der Hydraulikpumpe und der Verstelleinrichtung dieser Pumpe vorgesehen ist, das in seine Schließstellung vorgespannt und von einem hydraulischen Vorsteuerdruck in einer Vorsteuerdruckkammer in die Offenstellung bewegbar ist, und bei dem ein auf elektrische Steuersignale ansprechendes elektromagnetisch betätigbares Ventil in einer Verbindungsleitung zwischen dem Auslaß der Hydraulikpumpe und der Vorsteuerdruckkammer angeordnet ist. Bei einer solchen elektrohydraulischen Antriebsanordnung sieht die Erfindung zweckmäßigerweise vor, daß die elektromagnetische Betätigungsvorrichtung des Ventils an die Einrichtung angeschlossen ist, die einen in Abhängigkeit von dem Drucksignal veränderbaren Arbeitszyklus aufweist, wobei die Ventile, der Wandler und die Einrichtung so ausgebildet und angeordnet sind, daß sie bei Unterbrechung der Zuspeisung einen im wesentlichen konstanten Leerlaufdruck am Pumpenauslaß aufrechterhalten.

Bei der neuen Ausbildung des elektrohydraulischen Antriebssystems wird nur eine sehr geringe Anzahl, bevorzugt nur ein einziger Druckwandler benötigt. Das elektrohydraulische Antriebssystem gemäß der Erfindung ist ohne weiteres auch einsetzbar in Fällen, bei denen mehrere Verbraucher unabhängig voneinander von der gleichen Hydraulikpumpe gespeist werden können, wobei vorteilhafterweise nur pro Verbraucher ein Druckwandler für das System benötigt wird, wobei über eine Auswahleinrichtung aus den zur Verfügung stehenden Drucksignalen eines nach vorbestimmten Gesichtspunkten ausgewählt wird, welches zur Steuerung der Hydraulikpumpe herangezogen wird. Das neue Antriebssystem ermöglicht es ferner, auf einfache Weise einen vorbestimmten Druck bei Leerlauf des Antriebssystems einzustellen, und zwar mit Hilfe lediglich eines einfachen elektrischen Bezugssignals, das leicht auf den gewünschten Wert eingestellt werden kann.

Die Anordnung ist zweckmäßigerweise so getroffen, daß das über die Einrichtung steuerbare Ventil in Schließstellung vorgespannt ist und durch das erzeugte Steuersignal in Richtung auf seine Offenstellung in einem Ausmaß bewegbar ist, welches dem Arbeitszyklus des Steuersignals proportional ist. Hierbei kann der Arbeitszyklus des Steuersignals zweckmäßigerweise umgekehrt proportional zu der Größe des Fehlersignals variiert werden. Die betreffende Einrichtung des elektrischen Steuerkreises kann zweckmäßigerweise einen Erzeuger für ein Bezugssignal aufweisen, dessen Größe auf den gewünschten Leerlaufdruck einstellbar ist. Dieses Bezugssignal wird gemeinsam mit dem Drucksignal einem Fehlersignalerzeuger zugeführt. Dieser kann zweckmäßigerweise in Form eines Differenzverstärkers vorliegen. Das Ausgangssignal des Fehlersignalerzeugers kann einem Wandler zugeführt werden, der so ausgebildet ist, daß er ein Steuersignal erzeugt, welches bei Unterbrechung der Zuspeisung den Leerlaufdruck der Hydraulikpumpe bestimmt. Bei Zuspeisung zu dem Hydraulikmotor wird dieses Steuersignal moduliert. Zu diesem Zweck ist ein Signalerzeuger vorgesehen, der zur Erzeugung eines mit vorbestimmter Frequenz intermittierenden Ausgangssignals dient. Dieses Ausgangssignal wird bezüglich der Impulsbreite bzw. der Amplitude moduliert. Zu diesem Zweck kann das Fehlersignal, das anhand der Differenz zwischen dem Bezugssignal und dem Drucksignal erzeugt wird, zusammen mit dem intermittierenden Signal einem Komparator zugeführt werden. Der erzeugt das eigentliche Steuersignal, und zwar mit einem Arbeitszyklus, der von der Größe des Fehlersignals bzw. von dem Verhältnis zwischen dem Differenzsignal (Fehlersignal) und dem intermittierenden oder wiederkehrenden Signal abhängig ist.

Der auf den Arbeitsdruck ansprechende Wandler wird zweckmäßigerweise über eine Fühlerleitung mit der zum Hydraulikmotor führenden Verbindungsleitung an einer Stelle verbunden, die hinter einer veränderbaren Strömungsdrosseleinrichtung liegt. Ein Strömungssteuerventil (Mehrwegeventil) sorgt dabei dafür, daß der Wandler mit der Verbindungsleitung nur verbunden wird, wenn der Hydraulikmotor gespeist wird, so daß ein Drucksignal nicht auftritt, wenn die Zuspeisung unterbrochen wird. Damit wird auf einfache Weise dafür Sorge getragen, daß in diesem Zustand (Leerlauf) zur Steuerung der Hydraulikpumpe lediglich das einstellbare elektrische Bezugssignal maßgeblich ist.

Aufgrund dieser Anordnung erhält man dann, wenn das Mehrwegeventil geschlossen ist, am Auslaß der Hydraulikpumpe einen konstanten Leerlaufdruck, der allein durch das feste elektrische Bezugssignal bestimmt wird. Wenn dagegen das Mehrwegeventil offen ist (unabhängig von der jeweiligen Wegeverbindung) sorgt die Anordnung des neuen elektrohydraulischen Antriebssystems dafür, daß zwischen dem Pumpenauslaßdruck und dem gefühlten Druck ein im wesentlichen konstanter Druckunterschied aufrechterhalten wird.

Die Erfindung wird nachfolgend anhand schematischer Zeichnungen an einem Ausführungsbeispiel näher erläutert.

Es zeigen:

Figur 1 in Form eines schematischen Schaltdiagramms das elektrohydraulische Antriebssystem gemäß der Erfindung.

Figur 2 die dem zugehörigen elektrischen Steuerkreis angehörende Einrichtung und

Figur 3 ein Wellenformdiagramm von einem intermittierend wiederkehrenden elektrischen Signal, wie es als modulierendes Signal verwendet werden kann.

Der elektrohydraulische Arbeitskreis 10 nach der Erfindung umfaßt eine Vordruckpumpe 12, die über einen Filter 20 aus einem Sumpf 18 ansaugt und über eine Leitung 14 die Saugseite einer Hydraulikpumpe 16 von veränderlicher Verdrängung speist. Der Ladedruck der Hydraulikpumpe 16 ist mit Pc angegeben. Am Auslaß der Hydraulikpumpe 16 wird ein Systemdruck $P_S$ geliefert, der über eine Leitung 22 mit dem Einlaß eines druckkompensierten Strömungssteuerventils 23 verbunden ist. Der Auslaß dieses Ventils 23 ist mit dem Einlaß eines Wegesteuerventils 24 verbunden. Die Hydraulikpumpe 16 wird über eine den Hub der Arbeitskolben steuernden Stelleinrichtung 33 gesteuert, die über eine Leitung 36, ein Steuerventil 26 und eine Leitung 34 an den Auslaß der Hydraulikpumpe 16 angeschlossen ist.

Das Vorsteuerventil 26 wird über eine Vorsteuereinrichtung überwacht. Diese überwacht eine Feder 28, deren Vorspannung durch einen Vorsteuerschieber oder Kolben 30 verändert wird, welcher in einer Vordruckkammer 32 einem Vorsteuerdruck unterworfen ist. Eine Strömungsdrossel 68 verbindet die Leitung 36 mit der Vordruckleitung 14. Die Feder 28 steuert das Vorsteuerventil 26 in die gezeigte Schließstellung, wobei die Drossel 68 dafür sorgt, daß an der Stelleinrichtung 33 nur der Vorsteuerdruck $P_C$ wirksam ist.

Ein Wegesteuerventil 24 ist im dargestellten Beispiel ein Vierwege-Dreistellungsschieber. Dieser kann mit dem druckkompensierten Strömungssteuerventil 23 zur einer integralen Einheit zusammengefaßt sein. Das Strömungssteuerventil 23 ist druckkompensiert, um eine trotz Druckänderungen im wesentlichen konstante Durchströmung zu gewährleisten. Das Wegeventil 24 steuert die Strömungsverbindungen zwischen einem hydraulischen Funktionsteil, einer hydraulischen Last oder einem Druckmittelmotor 40 und der Speiseleitung 22 und der Rücklaufleitung 38, die in die Vordruckleitung 14 mündet. Das Ventil 24 umfaßt eine Fühlöffnung 42. Diese kann mit dem Fluiddruck stromabwärts von der variablen Steuerdrosselöffnung 44 verbunden werden. Die Fühlöffnung 42 gehört zu einer Fühlleitung 46, die zu einem Druckwandler 48 führt. Die Fühlöffnung wird durch das Ventil 24 von dem Druck in der Arbeitsleitung getrennt, wenn die hydraulische Last 40 mit der Hydraulikpumpe 16 nicht verbunden ist. In den Offenstellungen des Ventils 24 sind Verbindungsbohrungen 41 bzw. 43 vorgesehen, um den Wandler 48 mit dem Arbeitsdruck hinter dem Strömungssteuerventil 23 zu verbinden. Eine Ausleckleitung 50 mit Drosselöffnung 52 verbindet die Fühlleitung 46 mit dem Sumpf 18.

Der Druckwandler 48 erzeugt ein den Druck wiedergebendes Signal, z.B. ein Gleichstromspannungssignal $V_p$. Die Größe dieses Signals ist proportional zu der Größe des gefühlten Arbeits- oder Lastdruckes $P_1$. Das Drucksignal $V_p$ wird zu einer Einrichtung 60 in Form eines die Impulsweite modulierenden Kreises geleitet. Dieser erzeugt ein der Impulsweite nach moduliertes Steuersignal $V_c$, dessen Arbeitszyklus bestimmt wird durch die Beziehung zwischen dem Drucksignal $V_p$ und einem Bezugs- oder Vergleichssignal $V_r$.

Es wird an dieser Stelle bemerkt, daß ein Druckfühler verwendet werden kann, der ein anderes Signal als ein Gleichstromsignal erzeugt. So könnte ein Druckfühler verwendet werden, bei dem der gefühlte Druck durch eine variable Frequenz wiedergegeben wird. In diesem Fall wird ein üblicher Frequenz/Spannungswandler (nicht gezeigt) verwendet, um das variable Frequenzsignal in ein Gleichstromsignal umzuwandeln, das dann der Einrichtung 60 zugeführt wird.

Das Steuersignal $V_C$ gelangt zu der elektromagnetischen Betätigungsspule 62 eines Ventils 64, welches beispielsweise ein Zweiwege/Zweistellungsventil ist. Das Ventil 64 öffnet um einen Betrag, der proportional dem Arbeitszyklus des Steuersignals $V_C$ ist. Mit dem Einlaß des Ventils 64 ist die Speiseleitung 22 vom Auslaß der Hydraulikpumpe 16 verbunden. Eine Vordruckleitung 66 verbindet den Auslaß des Ventils 64 mit der Vordrucksteuerkammer 32. Auch diese Leitung ist wie die Leitung 36 über eine Drosselöffnung 70 mit der Vordruckleitung 14 verbunden. Es wird darauf hingewiesen, daß die Funktionen der Drosselöffnungen 68 und 70 auch durch entsprechende Leckverbindungen zum Sumpf hin in den Ventilen 26 bzw. 64 selber vorgesehen sein könnten.

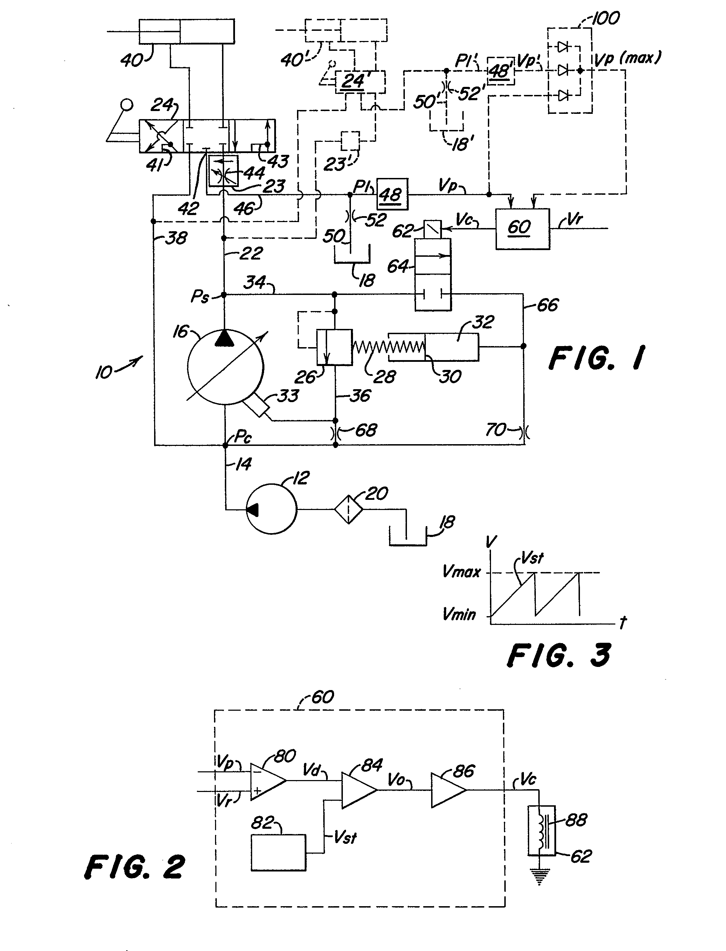

Es wird nun bezug genommen auf Figur 2. In dieser ist die Einrichtung 60 zur Modulation der Impulsweite gezeigt. Diese weist als Eingangsglied einen Differentialverstärker 80 auf. Dieser besitzt einen umgekehrten Einlaß (minus), der das Drucksignal $V_p$ vom Wandler 48 enthält. Ein nicht umkehrender Einlaß (plus) ist an einen nicht dargestellten Erzeuger für ein Bezugssignal $V_r$ angeschlossen. Der Differentialverstärler 8o erzeugt eine Differenzspannung $V_d = A (V_r - V_p) + V_{CC}$. Hierin ist A der Verstärkungsfaktor, während die Größe $V_{CC}$ eine Spannungsversetzung wiedergibt, die durch die Energiequelle (nicht gezeigt) bestimmt ist. Ein Generator 82 zur Erzeugung eines intermittierenden Signals, z.B. eines Sägezahnwellenimpulses erzeugt eine Spannung $V_{st}$, die zwischen der minimalen Spannung $V_{mi}$ und einer maximalen Spannung $V_{max}$ in regelmäßiger Weise schwankt. Für dieses Signal sind unterschiedliche Frequenzen geeignet. Dies hängt ab von der Zeitansprechcharakteristik des elektromagnetisch betätigbaren Ventils 64. Wenn dieses Ventil 64 ein handelsübliches proportional arbeitendes Solenoidventil ist kann die Sägezahnfrequenz des Impulses einen Wert bis 100 Hz aufweisen. Die Differenzspannung $V_d$ und die Sägezahnspannung $V_{st}$ gelangen zu den Eingängen eines Spannungsniveaukomparators 84. Der Ausgang $V_O$ des Komparators 84 wird impulsartig nach oben gesteuert wenn die Spannung $V_d$ kleiner ist als die Zägezahnspannung $V_{st}$. Dagegen wird der Ausgang $V_O$ des Komparators 84 auf einen niedrigen Wert gesteuert, wenn die Spannung $V_d$ größer oder gleich der Sägezahnspannung $V_{st}$ ist. Die Spannungsimpulse $V_O$ werden durch den Verstärker 86 verstärkt, dessen Ausgang das Steuersignal $V_C$ liefert, welches seinerseits der Betätigungsspule 62 des Ventils 64 zugeführt wird.

Die Arbeitsweise des Antriebssystems ist folgende:

Wenn das Richtungssteuerventil 24 geschlossen ist, (Fig. 1) ist die Fühlleitung 46 von der Verbindungsleitung zwischen der Hydraulikpumpe 16 und dem Motor 40 getrennt. Der Druck $P_1$ am Wandler 48 ist gering und er liegt etwa bei dem Sumpfdruck, da die Leitung über die Ausleckleitung 50 entspannt wird. Wenn der Druck $P_1$ niedrig ist, ist auch der Ausgang $V_p$ des Wandlers 48 niedrig, so daß die Differenzspannung $V_d$ einen hohen Wert besitzt. Die Werte des Verstärkungsfaktors A und der Spannungen $V_{cc}$, $V_r$, $V_{min}$ und $V_{max}$ können so gewählt werden, daß in diesem Zustand mit geschlossenem Ventil 24 die Spannung $V_d$ nur geringfügig größer ist als der Wert $V_{max}$. Die Folge ist, daß das Ausgangssignal $V_O$

des Komparators 84 niedrig bleibt. In diesem Fall ist auch das Ausgangs- oder Steuersignal $V_c$ niedrig mit einem Arbeitszyklus von 0%. Die Wicklung 62 des Ventils 64 wird somit nicht eingeschaltet und das Ventil 64 bleibt geschlossen. Der Druck in der Leitung 66 und der Vordruckkammer 82 entspricht im wesentlichen dem Vordruck der Leitung 14. Der niedrige Druck in der Kammer 32 führt dazu, daß die Feder 28 in Verbindung mit dem Druck $P_s$ dafür sorgen, daß das Vorsteuerventil 26 die Offenstellung einnimmt, so daß der Auslaß der Hydraulikpumpe 16 die Stelleinrichtung 33 beaufschlagt. Die Anordnung ist dabei so getroffen, daß ein Druck an der Stelleinrichtung 33 erzeugt wird, der ausreicht, um eine nur geringe Verstellung der verstellbaren Hydraulikpumpe 16 zu bewirken. Diese liefert somit einen relativ niedrigen oder Leerlaufdruck an ihrem Auslaß.

Die Größe dieses Leerlaufdruckes kann dadurch verändert werden, daß man die Spannung an der Feder 28 verändert. Einfacher ist eine Verstellung dadurch, daß man die Größe der Bezugsspannung $V_r$ verändert. Wird beispielsweise $V_r$ verringert, so nimmt das Signal $V_d$ entsprechend zu. Dadurch wird ein proportionaler Anstieg im Arbeitszyklus des Steuersignals $V_c$ erreicht, mit der Folge, daß das Ventil 64 proportional öffnet. Die Zunahme des Druckes in der Vorsteuerkammer 32 führt zu einem leichten Schließen des Steuerventils 26. Das leichte Schließen des Vorsteuerventils 26 vermindert den Druck an der Stelleinrichtung 33 mit der Folge einer Vergrößerung der Verschiebung der Einstellung der Hydraulikpumpe 16. Insgesamt wird dadurch der Systemdruck $P_s$ in der Systemleitung 22, 34 vergrößert mit der Folge einer vergrößerten Strömung durch das Ventil 64. Der vergrößerte Druck in der Leitung 34 führt zu einem negativen Rückmeldesignal durch die Pilotleitung des Ventils 26. Die Tendenz ist dabei das Ventil 26 stärker zu schließen. Insgesamt pendelt sich die Anordnung ein und verhindert damit eine größere Zunahme des System-

druckes $P_S$. Das Vorsteuerventil 26, der Kolben 30 und das Ventil 64 sind so gewählt, daß die negative Rückmeldung und der vergrößerte Druckabfall über das Ventil 64 der Zunahme des Druckes in der Vordruckkammer 32 entgegenwirkt. Insgesamt wird damit das Steuerventil 26 in einer Stellung gehalten, die einem geringfügig vergrößerten Systemdruck $P_S$ entspricht, der wiederum der Abnahme der Bezugsspannung $V_r$ proportional ist. Bei diesem Vordruckniveau wird nur noch eine verminderte Antriebsleitung für die Hydraulikpumpe benötigt. .

Nunmehr wird das Richtungssteuerventil 24 in eine seiner Offenstellungen bewegt, um den Druckmittelmotor 40 zu betätigen. Der Druck aus der Speiseleitung 22 gelangt über die Drossel 44 und das Wegesteuerventil 24 zum Arbeitsglied 40. Dieser Druck hinter der Drossel 44 wird über eine der Verbindungen 41 oder 43, die Fühlöffnung 42 und die Fühlleitung 46 dem Wandler 48 zugeleitet. Der sich dadurch erhöhende Druck Pl in der Fühlleitung 46 führt zur Erzeugung eines Drucksignals $V_p$ am Ausgang des Druckwandlers 48, wobei dieses Ausgangssignal dem gefühlten Druck proportional ist. Das zunehmende Signal VP führt zu einer entsprechenden Abnahme des Differenzsignals $V_d$. Dieses Signal nimmt damit einen Wert an, der unterhalb des Wertes $V_{max}$ liegt. Dadurch wird das Ausgangssignal $V_o$ des Komparators 84 periodisch auf die hohen Werte hochgesteuert, und zwar jedesmal dann, wenn das Niveau der Sägezahnspannung $V_{st}$ größer ist als der Wert des Differenzsignals $V_d$. Die periodisch wiederkehrenden Impulse des Signals $V_o$ werden durch den Verstärker 86 verstärkt und als impulsgesteuertes Steuersignal $V_c$ der elektromagnetischen Betätigungseinrichtung 62 bzw. deren Wicklung 88 zugeleitet. Die impulsbeeinflußten Steuersignale $V_c$ führen zu einem intermittierenden Öffnen des Ventils 64. Dadurch wird der Druck in der Vorsteuerleitung 66 erhöht und die Vorspannung der Feder 28 um den Druck in der Vorsteuerleitung 66 verstärkt. Damit erfolgt ein proportionales Schließen des Steuerventils 26 und damit eine entsprechende Verminderung des Druckes in der Leitung 36 und an der Stelleinrichtung 33. Der verminderte Druck an der Stelleinrichtung 33 führt zu einer Vergrößerung der Verstellung der Hydraulikpumpe 16 und damit auch zu einer Vergrößerung von deren Verdrängung. Dadurch nimmt der Systemdruck $P_S$ am Auslaß der Pumpe 16 zu. Es wird bemerkt, daß die Zunahme des Systemdruckes $P_S$ auch einen weiteren Anstieg des gefühlten Druckes $P_1$ zur Folge hat. Dies führt zu einer weiteren Absenkung der Spannung $V_d$ und einer weiteren Zunahme des Arbeitszyklus des impulsförmigen Steuersignals $V_C$. Die Vergrößerung des Arbeitszyklus öffnet weiter das Ventil 64 mit der Folge, daß das Ventil 26 weiter schließt und der Druck in der Verstelleinrichtung 33 abnimmt und die Verdrängung der Hydraulikpumpe 16 zunimmt. Der gesamte Vorgang führt dazu, daß die Verstellung der Hydraulikpumpe und die Veränderung des Auslaßdruckes sich rasch von dem niedrigen Leerlaufwert auf höhere Arbeitswerte ändern, und zwar jedesmal wenn das Richtungssteuerventil 24 geöffnet wird. Obwohl hohe Ausgangsdrücke auf diese Weise erzielt werden können, wenn das Steuerventil 24 geöffnet wird, kann die Hydraulikpumpe 16 stets bei niedrigem und wenig Energie verbrauchenden Niveau betrieben werden, wenn das Steuerventil 24 geschlossen ist und wenn nur eine geringe hydraulische Leistung benötigt wird.

Wenn der Ausgangsdruck $P_S$ der Hydraulikpumpe 16 auf einen Wert zunimmt der ausreicht, eine Bewegung des Fluidmotors oder der Last 40 zu bewirken, nimmt auch die Fluidströmung zum Motor 40 über die Speiseleitung 22 und die variable Drossel 44 zu. Diese zunehmende Strömung führt zu einer Zunahme des Druckabfalls über die Drossel 44 und vermindert den Druck $P_1$ in der Leitung 46, der von dem Wandler 48 gefühlt wird. Die Verminderung des

Druckes $P_1$ führt zu einer Abnahme in der Spannung $V_p$, einer entsprechenden Abnahme im Arbeitszyklus des Steuersignals $V_C$, einem proportionalen Schließen des Ventils 64, einer Abnahme des Druckes in der Vordruck-steuerkammer 32, einem proportionalen Öffnen des Vorsteuer-ventils 26 und schließlich zu einer Druckzunahme in der Leitung 36. Die Folge ist eine Verminderung der Verdrängung der Hauptpumpe oder Hydraulikpumpe 16. Die Verminderung der Verdrängung hat die Tendenz, eine weitere Strömungszunahme durch die Drosselöffnung 44 zu verhindern, so daß sich ein quasi stationärer Zustand einstellt, bei dem das hydraulische Antriebssystem 10 so arbeitet, daß sich ein im wesentlichen konstanter Druckunterschied zwischen dem Auslaßdruck der Hydraulikpumpe $P_S$ und dem gefühlten Lastdruck $P_1$ einstellt. Der spezielle Wert dieses Druckunterschiedes hängt ab von der Verstärkung im Modulationskreis 60, der Größe des Kolbens 30 und der Federkonstante der Feder 28. Ein weiteres Merkmal dieses Systems besteht darin, daß der Lastdruck $P_1$ linear als Funktion des Arbeitszyklus des Steuersignals $V_C$ variiert.

Die vorstehende Beschreibung bezieht sich auf eine Anordnung mit einem einzigen hydraulischen Funktionsglied 40, wie dies mit ausgezogener Linie in Fig. 1 gezeigt ist. Es kann jedoch auch ein Antriebssystem mit mehreren hydraulischen Funktionen oder Hydraulikmotoren 40, 40' in der gleichen Weise betrieben werden, wie eine solche hydraulische zusätzliche Funktion mit gestrichelten Linien in Fig. 1 angedeutet ist. Jede Funktion 40' umfaßt hierbei ein entsprechendes Wegesteuerventil 24' und ein druckkompensiertes Strömungssteuerventil 23', ähnlich den Ventilen 24 bzw. 23, die zuvor beschrieben worden sind. Diese dienen zur Verbindung des hydraulischen Funktionsgliedes 40' mit der Speiseleitung und der Rücklaufleitung 22 bzw. 38. Weiterhin ist für jede hydraulische Funktion ein gesonderter Fühler oder Wandler 48' vorgesehen, der ein Drucksignal $V_p'$ entsprechend dem Belastungsdruck $P_1'$ jedes Funktionsgliedes 40' erzeugt. Bei dieser Mehrfachfunktion werden die Drucksignale $V_p$ und $V_p'$ von den Wandlern 48, 48' einer Auswahleinrichtung 100 zugeführt, über die eine Verbindung mit dem Modulationskreis 60 hergestellt ist. Der Auswahlkreis 100 kann z.B. mit mehrfachdioden bestückt sein, deren Katoden miteinander verbunden sind, während jede Anode als Eingangsglied für die Drucksignale $V_p$ und $V_p'$ dienen. Der Auswahlkreis 100 erzeigt damit ein Signal $V_p$ (max), welches das Größte der Drucksignale $V_p$ und $V_p'$ wiedergibt. Dieses Signal wird dann dem Eingang des Modulationskreises 60 anstelle des einzelnen Drucksignals $V_p$ zugeführt, wie dies bei der Einfachfunktion beschrieben worden ist. Der Rest der Antriebssysteme 10 arbeitet in der zuvor beschriebenen Weise, um die Verstellung der Hydraulikpumpe 16 als Funktion von jeweils demjenigen Hydraulikmotor oder dergleichen zu steuern, welcher den höheren Lastdruck $P_1$ oder $P_1'$ zeigt.

Patentansprüche

1. Elektrohydraulisches Antriebssystem bestehend aus einer Druckmittelquelle in Form einer Hydraulikpumpe mit variabler Verdrängung, einer auf einen Steuerdruck ansprechenden Verstelleinrichtung für die Hydraulikpumpe und wenigstens einem Verbraucher, z.B. einem Hydraulikmotor, der über eine durch Ventil steuerbare Leitungsverbindung mit dem Auslaß der Hydraulikpumpe verbindbar ist, bei dem eine den Auslaßdruck der Hydraulikpumpe steuernde Verstelleinrichtung vorgesehen ist, welche über eine Steuereinrichtung mit einem Steuerdruck beaufschlagbar ist, und bei dem ein elektrischer Steuerkreis vorgesehen ist, der ein auf den Arbeitsdruck in der zum Hydraulikmotor führenden Verbindungsleitung ansprechenden und ein dem Druck entsprechendes Signal erzeugender Wandler aufweist, dadurch g e k e n n - z e i c h n e t , daß der elektrische Steuerkreis eine das elektrische Drucksignal ($V_p$) des Wandlers (48) in ein entsprechendes Steuersignal ($V_c$) umwandelnde Einrichtung (60) aufweist, die so ausgebildet ist, daß bei Speisung des Hydraulikmotors 40 durch die Hydraulikpumpe (16) ein im wesentlichen konstanter Unterschied zwischen dem gefühlten Arbeitsdruck und dem Auslaßdruck der Hydraulikpumpe aufrecht gehalten wird.

2. Elektrohydraulisches Antriebssystem nach Anspruch 1, bei dem ein vorgesteuertes Ventil zur Steuerung der Verbindung zwischen dem Auslaß der Hydraulikpumpe und der Verstelleinrichtung dieser Pumpe vorgesehen ist, das in seine Schließstellung vorgespannt und von einem hydraulischen Vorsteuerdruck in einer Vorsteuer-Druckkammer in die Offenstellung bewegbar ist, und bei dem ein auf elektrische Steuersignale ansprechendes elektromagnetisch betätigbares Ventil in einer Verbindungsleitung zwischen dem Auslaß der Hydraulikpumpe und der Vorsteuer-Druckkammer angeordnet ist, dadurch g e k e n n z e i c h n e t , daß die elektromagnetische Betätigungsvorrichtung(62) des Ventils (64) an die Einrichtung (60) angeschlossen ist und daß diese einen in Abhängigkeit von dem Drucksignal veränderlichen Arbeitszyklus aufweist, und daß die Ventile (23,64),der Wandler (48) und die Einrichtung (60) so ausgebildet und angeordnet sind, daß bei Unterbrechung der Zuspeisung ein im wesentlichen konstanter Leerlaufdruck am Pumpenauslaß aufrechtgehalten wird.

3. Elektrohydraulisches Antriebssystem nach Anspruch 2, dadurch g e k e n n z e i c h n e t , daß das über die Einrichtung (60) steuerbare Ventil (62,64) in Schließstellung vorgespannt ist und durch das Steuersignal von dieser Einrichtung (60) in Richtung auf seine Offenstellung in einem Ausmaß bewegbar ist, das dem Arbeitszyklus der Steuersignale proportional ist.

4. Elektrohydraulisches Antriebssystem nach einem der Ansprüche 1 bis 3, dadurch g e k e n n z e i c h n e t , daß die Einrichtung (60) des elektrischen Steuerkreises einen Erzeuger für ein Bezugssignal ($V_r$) aufweist, dessen Größe auf den gewünschten Leerlaufdruck einstellbar ist, und das gemeinsam mit dem Drucksignal ($V_p$) einem Fehlersignalerzeuger, insb. einem Differenzverstärker (80) zuführbar ist, dessen Ausgangssignal einem Wandler 684) zuführbar ist, der so ausgebildet ist, daß er ein Steuersignal erzeugt, welches bei Unterbrechung der Zuspeisung den Leerlaufdruck der Hydraulikpumpe (16) bestimmt.

5. Elektrohydraulisches Antriebssystem nach Anspruch 4, dadurch g e k e n n z e i c h n e t , daß die Einrichtung (60) einen Signalerzeuger (82) zum Erzeugen eines mit vorbestimmter Frequenz intermittierenden Ausgangssignal ($V_{st}$) von modulierter Impulsbreite oder variabler Amplitude aufweist, das zusammen mit dem Fehlersignal einem Komparator (84) zugeführt wird, welcher das Steuersignal ($V_c$) mit einem Arbeitszyklus erzeugt, der von der Größe des Fehlersignals bzw. von dem Verhältnis zwischen dem Differenzsignal und dem wiederkehrenden Signal abhängig ist.

6. Elektrohydraulisches Antriebssystem nach Anspruch 4 oder 5, dadurch g e k e n n z e i c h n e t , daß der Arbeitszyklus des Steuersignals umgekehrt proportional zu der Größe des Fehlersignals variiert wird.

7. Elektrohydraulisches Antriebssystem nach Anspruch 1 oder 2, dadurch g e k e n n z e i c h n e t , daß in der Verbindungsleitung eine veränderbare Strömungsdrosseleinrichtung (23,44) und ein Strömungssteuerventil (24) vorgesehen sind, welch Letzteres nur in geöffnetem Zustand die Fühlöffnung (42) einer Druckfühlleitung (46) des Wandlers (48) mit einer Stelle der Verbindungsleitung in Strömungsrichtung hinter der Strömungsdrosseleinrichtung (23,44) verbindet.

8. Elektrohydraulisches Antriebssystem nach Anspruch 1 oder 2, dadurch g e k e n n z e i c h n e t , daß bei mehreren von der gleichen Hydraulikpumpe (16) speisbaren Hydraulikmotoren (40,40') jedem dieser Motore ein Wandler (48,48') zugeordnet ist und die Ausgänge aller Wandler an einen Auswählkreis (100) angeschlossen sind, der ein Signal für die Einrichtung (60) erzeugt, welches dem größten der verschiedenen gefühlten Drücke entspricht.

1/1

*FIG. 1*

*FIG. 2*

*FIG. 3*